# EUROPEAN PATENT SPECIFICATION

(11) **EP 0 364 252 B1**
(45) Date of publication and mention of the grant of the patent: **27.04.1994**
(21) Application number: 89310420.8
(22) Date of filing: 11.10.1989
(51) Int. Cl.: G01N 3/56

(54) **Wear testing devices**
Abrasionsprüfgeräte
Dispositifs d'essai d'abrasion

(30) Priority: 11.10.1988 JP 256335/88
(43) Date of publication of application: 18.04.1990
(73) Proprietor: STARLITE CO., LTD., Tsurumi-ku Osaka 538 (JP)
(72) Inventor: Kobayashi, Takashi, Suminoe-ku Osaka-shi Osaka (JP); Suzuki, Eiji, Nishiyodogawa-ku Osaka-shi Osaka (JP); Uchiyama, Yoshitaka, Toyama-shi Toyama-ken (JP)
(74) Representative: Fane, Christopher Robin King

(56) References cited:
- NUCLEAR INSTRUMENTS & METHODS IN PHYSICS RESEARCH, vol. 209/210, May 1983, pages 881-887; F.-Z. CUI et al.: "Modification of tribological characteristics of metals after nitrogen implantation"
- SOVIET INVENTIONS ILLUSTRATED, week 8738, 30th September 1987, no. A35 S03, 87-269615/38, Derwent Publications Ltd, London, GB ; & SU-A-1288547
- PATENT ABSTRACTS OF JAPAN, vol. 8, no. 188 (P-297)[1625], 29th August 1984; & JP-A-59 79 143

## Description

The present invention relates to wear testing devices used for measuring the amount of wear of a sliding material, for example pin-on-disk type wear testing devices in which a pin-type testpiece is held, under a constant load, in contact with a rotating disk and the amount of wear of the pin-type testpiece is measured.

A known such pin-on-disk type wear testing device, for measuring the amount of wear of a sliding material, may be considered to comprise means for supporting a testpiece, of uniform cross-section along a main axis thereof, so that one end of the testpiece is maintained under constant load against the main face of a substantially flat test member, with the said main axis of the test piece substantially perpendicular to that main face, and means for bringing about rotary movement of the said test member relative to the said testpiece about an axis displaced from the testpiece and substantially perpendicular to the said main face, so that the said one end slides along a circular track over the said main face, and also to comprise displacement measuring means arranged for measuring longitudinal displacement of the said testpiece.

In this known device the testpiece to be measured for wear, which is pin-like, is held stationary and is supported in contact with the test member, which is in the form of a rotating disk, and the wear of the pin-type testpiece is measured with respect to time.

With such a pin-on-disk type wear testing device, the following two kinds of methods for measuring the wear rate have been used. In Method "A" the rate of weight loss from the pin-type testpiece which slides against the rotating disk-type test member is measured with respect to time to calculate the rate of wear with respect to time.

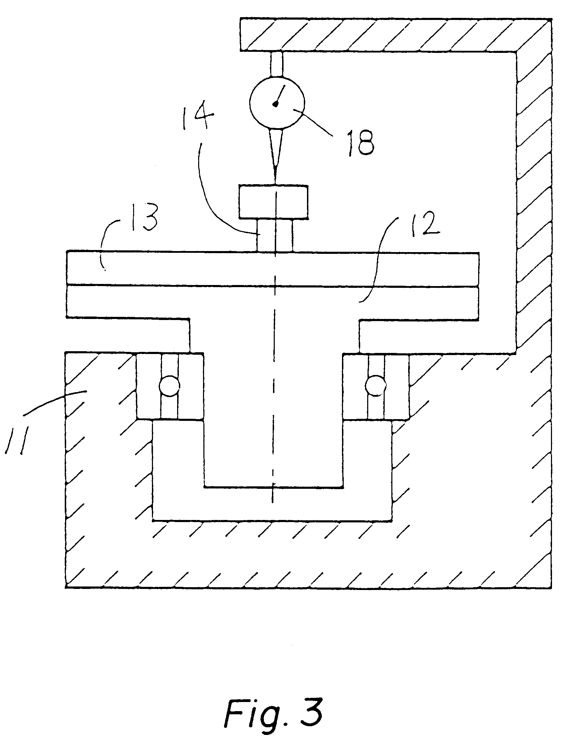

In Method "B", as shown in the accompanying Figure 3, the rotating disk-type test member 13 is mounted on a rotary table (disk-type test member table) 12 that is supported by a base 11. A contact or non-contact type displacement gauge 18 is fixed to the base 11 for detecting the progressive amount of displacement between the base 11 and the pin-type testpiece 14 which is maintained in contact with the disk-type test member 13 under a constant load, and the amount of wear of the pin-type testpiece **14** is measured by the amount of displacement.

In method "A", since the pin type testpiece must be dismounted from the wear testing device at specified intervals of time for measurement of its weight and then refitted to the wear testing device for continued testing, the test efficiency is greatly sacrificed. Moreover, when the pin type testpiece once dismounted is refitted to the wear testing device, the pin type testpiece cannot be positioned to contact the disk type testpiece at the same position where it had been in contact with the disk type testpiece before the removal therefrom, with a resultant change in the condition of the wear debris existing between the pin type testpiece and the disk type testpiece, hampering accurate measurement of the wear of the pin type testpiece with respect to time. Furthermore, at the time of the weight measurement, if the pin type testpiece absorbs moisture with a resultant change in its weight, it is not possible to accurately measure the amount of wear of the pin type testpiece.

On the other hand, method "B" allows continuous measurement of the wear rate of the pin type testpiece with respect to time. However, since the displacement gauge **18** is fixed to the base **11** of the wear testing device, the amount of displacement measured by the displacement gauge **18** represents the absolute displacement with respect to the base **11**. This means that the amount of displacement measured by the displacement gauge **18** includes not only the wear loss Δh of the pin type testpiece but also the error Δh′ caused by the displacement of the disk type test member with respect to the base **11**. The causes of the error Δh' include the displacement caused by an axial positional change of the disk-type test member **13** due to its rotational motion, a circumferential waving motion of the disk-type test member **13**, and the thermal expansion of the whole device due to thermal changes such as heat generation arising from friction between the pin-type testpiece and the disk-type test member, all of which combine to prevent accurate measurement of the wear rate of the pin-type testpiece **14** with respect to time.

Another proposed wear testing device of the pin-on-disk type, disclosed in "Modification of Tribological Characteristics of Metals after Nitrogen Implantation", Nuclear Instruments and Methods, Vols. 209/210, May 1983, pages 881-883, measures wear of the pin-type testpiece volumetrically, the pin having a point in the form of a truncated cone. However, as in Method "A" above, in the disclosed device such volumetric wear is not measured continuously during rotation. Only the tangential sliding distance is measured during rotation, by means of a strain gauge connected between the pin-type testpiece and the device base.

JP-A-59-79143 discloses a grindstone which uses a non-contact displacement sensor, opposed to a main face of a grindstone, for measuring wear of the grindstone. However, the sensor is connected to the grindstone frame so that the measurements obtained are subject to errors outlined with reference to Method "B" above, such as circumferential waving motion of the grindstone and thermal expansion of the whole device.

According to the present invention there is provided a wear testing device comprising means for supporting a testpiece, of uniform cross-section along a main axis thereof, so that one end of the testpiece is maintained under constant load against the main face of a substantially flat test member, with the said main axis of the test piece substantially perpendicular to that main face, and means for bringing about rotary movement of the said test member relative to the said testpiece about an axis displaced from the testpiece and substantially perpendicular to the said main face, so that the said one end slides along a circular track over the said main face, and also comprising displacement measuring means arranged for measuring longitudinal displacement of the said testpiece;
characterised in that the displacement measuring means comprise a non-contact type displacement sensor, fixedly supported in relation to the testpiece so as to be subject to any movement thereof towards the said main face when the device is in use, for providing a measure of change in the distance of the sensor from the said main face.

In a preferred embodiment of the invention, the non-contact type displacement sensor is so mounted as to face a position on the said circular track adjacent to the position on that track at which the said testpiece is in sliding contact with the said test member.

In a preferred embodiment of the invention, the test member is preferably a disk which is mounted for rotation on a rotary table that is rotatably supported by a base.

Thus, an embodiment of the invention can provide a pin-on-disk type wear testing device which has a non-contact type displacement gauge that moves integrally with the pin type testpiece sliding against the disk type testpiece, so that the device can accurately measure the displacement of the pin type testpiece with respect to the disk type testpiece without being affected by waving motion of the disk type testpiece or by thermal expansion of parts of the whole device, thus making it possible to measure the amount of wear of the pin type testpiece with desirably improved accuracy.

Reference will now be made by way of example to the accompanying drawings, in which:
Fig. 1 is a cross sectional view showing a pin-on-disk type wear testing device embodying the present invention;
Fig. 2 is a plan view showing the positional relationship between a pin type testpiece, a displacement gauge and a disk type testpiece in the testing device of Fig. 1;
Fig. 3 is a cross sectional view showing a conventional pin-on-disk type wear testing device;
Fig. 4 is a graph showing the results of measurement by a pin-on-disk type wear testing device embodying the present invention as compared with a conventional pin-on-disk type wear testing device.

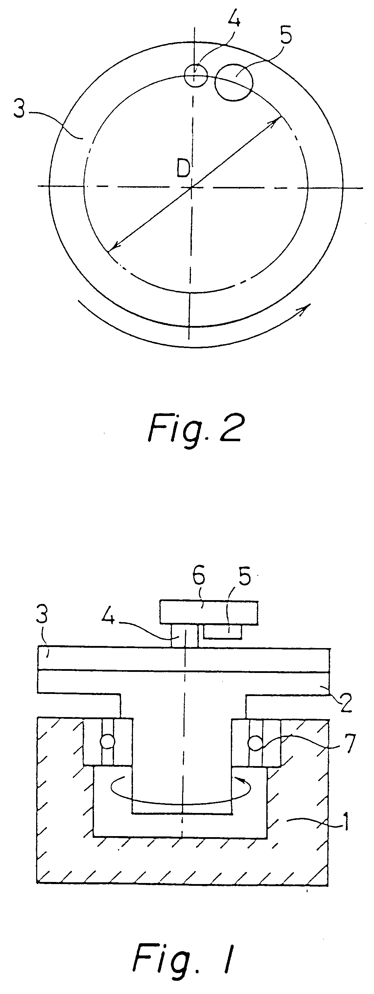

Fig. 1 shows a pin-on-disk type wear testing device embodying the invention, which includes a testpiece table **2** rotatably supported in a base **1** by means of a ball bearing **7**. The testpiece table **2** has an approximately planar top surface on which a disk type testpiece **3** is mounted for rotation therewith. As shown in Fig. 2, a pin type testpiece **4** is held stationary and in contact with the rotating disk under a constant load at a position away from the rotational center thereof by a given distance, the pin type testpiece **4** sliding against the disk type testpiece **3** along a circular track of a given diameter **D** by the rotation of the disk type member **3**. The pin type testpiece **4** is fixed to a pin type testpiece holder **6** which is held stationary and which does not rotate with the rotating disk type testpiece **3**, the pin type testpiece holder **6** moving integrally with the pin type testpiece **4** in the vertical direction to follow the vertical movement of the pin type testpiece **4**.

Mounted to the pin type testpiece holder **6** is a non-contact type displacement sensor, or gauge, **5**. The non-contact type displacement gauge **5** is so mounted as to face a position adjacent to a position where the pin type testpiece **4** slides against the disk type test-piece **3** along the circular track thereon, for measuring the relative displacement of the facing position on the disk type testpiece **3** with respect to the pin type testpiece holder **6**. The amount of wear of the pin type testpiece **4** is measured with respect to time on the basis of the measurement by the non-contact type displacement gauge **5**.

In the pin-on-disk type wear testing device of Figure 1, the pin type testpiece **4** is held stationary and in contact with the rotating disk type testpiece **3** under a constant load for sliding along the specified circular track thereon, thus generating progressive wear of the pin type testpiece **4**. The non-contact type displacement gauge **5** is mounted to the pin type testpiece holder **6**, to which the pin type testpiece **4** is fixed, to continuously measure the displacement of the pin type testpiece holder **6** with respect to the position adjacent to the position where the pin type testpiece **4** is sliding against the disk type testpiece **3** along the circular track thereon, and the displacement measured by the displacement gauge **5** with respect to time is monitored to provide a measure of the rate of wear of the pin type testpiece **4** with respect to time.

Since the non-contact type displacement gauge **5** is fixed to the pin type testpiece holder **6** which moves integrally with the pin type testpiece **4** to follow the vertical movement thereof, if the disk type testpiece **3** exhibits a waving motion in its circumferential direction, the displacement gauge **5** is prevented from being affected by the waving motion of the disk type testpiece **3**, the pin type testpiece **4** moving to follow the waving motion thereof and therefore the pin type testpiece holder **6** moving to follow the movement of the pin type testpiece **4**. Also, if the whole device is deformed due to thermal expansion, the displacement of the disk type testpiece **3** due to the deformation is prevented from being measured by the displacement gauge **5**. Thus, the pin-on-disk type wear testing device of Figure 1 is capable of accurately measuring the wear rate of the pin type testpiece **4**.

### (Example)

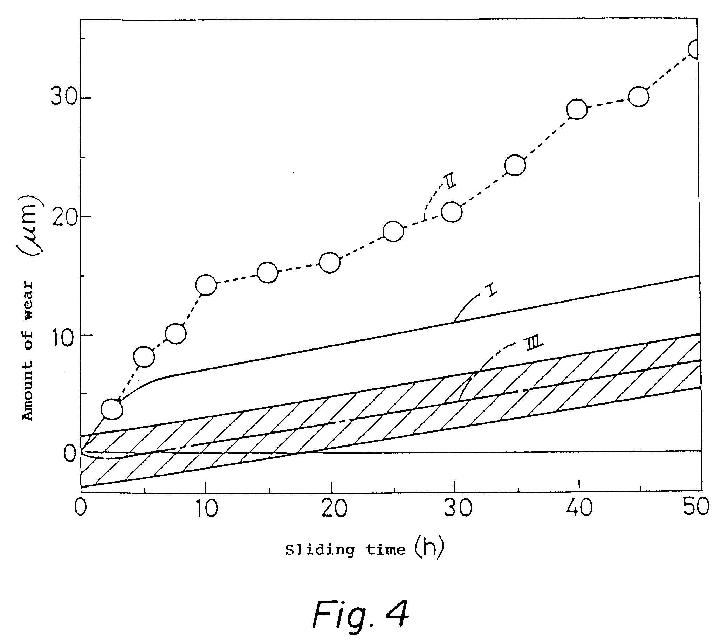

For use as a pin type testpiece, 90% by weight of polyacetal and 10% by weight of polytetrafluoroethylen (PTFE) were mixed and molded by injection to produce a pin shaped material 3 mm in length and 5 mm in diameter. A stainless steel material (SUS 303, surface roughness Ra = 0.1 µm ± 0.05 µm) was formed in a shape 10 mm in thickness and 100 mm in diameter, to use as a disk type testpiece. The diameter of the circular track along which the pin type testpiece was to slide against the disk type testpiece was determined at 85 mm, the contact pressure between the pin type testpiece and the disk type testpiece at 0.3 MPa, the sliding speed of the pin type testpiece (the rotating speed of the disk type testpiece) at 0.5 m/s, and the test temperature at 23°C, and the amount of wear of the pin type testpiece was measured by the above described pin-on-disk type wear testing device of Figure 1. The results are shown in the graph of Fig. 4 as wear progress curve **I**.

For comparison, the amount of wear of the pin type testpiece was measured by the previously described method "A" in which the loss of weight from the pin type testpiece sliding against the rotating disk type testpiece is measured, as well as by the device shown in Fig. 3 (method "B"). The results are shown in the graph of Fig. 4 as wear progress curves **II** and **III**, respectively.

The wear progress curve **I** for the pin type testpiece measured by the wear testing device of Figure 1 shows a stable progress with respect to time, indicating accurate measurement of the amount of wear of the pin type testpiece. On the other hand, in method "A", since the weight of the pin type testpiece is measured when the pin type testpiece dismounted from the wear testing device, and then the pin type testpiece is refitted to the wear testing device, the position at which the pin type testpiece slides against the disk type testpiece changes, the effect being shown in the measurement. Method "B" is susceptible to the error caused by such factors as axial motion of the disk type testpiece and thermal expansion of the whole device, and in some cases, causes a phenomenon in which a negative value is given as the wear value in the early stage of the wear. Furthermore, the circumferential waving motion of the disk type testpiece affects the measurement, causing the wear progress curve to greatly fluctuate so as to hamper accurate measurement.

As described above, a pin-on-disk type wear testing device embodying the invention is capable of providing highly reliable measurement.

## Claims

1. A wear testing device comprising means for supporting a testpiece (4), of uniform cross-section along a main axis thereof, so that one end of the testpiece is maintained under constant load against the main face of a substantially flat test member (3), with the said main axis of the test piece (4) substantially perpendicular to that main face, and means for bringing about rotary movement of the said test member (3) relative to the said testpiece (4) about an axis displaced from the testpiece and substantially perpendicular to the said main face, so that the said one end slides along a circular track over the said main face, and also comprising displacement measuring means arranged for measuring longitudinal displacement of the said testpiece (4);
characterised in that the displacement measuring means comprise a non-contact type displacement sensor (5), fixedly supported in relation to the testpiece (4) so as to be subject to any movement thereof towards the said main face when the device is in use, for providing a measure of change in the distance of the sensor (5) from the said main face.

2. A device according to claim 1, wherein the said non-contact type displacement sensor (5) is so mounted as to face a position on the said circular track (3) adjacent to the position on that track at which the said testpiece (4) is in sliding contact with the said test member (3).

3. A device according to claim 1 or 2, wherein the said test member (3) is a disk which is mounted for rotation on a rotary table (2) that is rotatably supported by a base (1).

## Patentansprüche

1. Verschleißprüfgerät, das ein Mittel zum Haltern eines Prüfstücks (4) von einheitlichem Querschnitt entlang einer Hauptachse davon aufweist, so daß ein Ende des Prüfstücks unter konstanter Belastung gegen die Hauptfläche eines im wesentlichen ebenen Prüfelements (3) gehalten wird, wobei die Hauptachse des Prüfstücks (4) im wesentlichen senkrecht zu dieser Hauptfläche liegt, und das ein Mittel umfaßt, um eine Drehbewegung des Prüfelementes (3) bezogen auf das Prüfstück (4) um eine Achse hervorzubringen, die gegenüber dem Prüfstück verschoben ist und im wesentlichen senkrecht zu der Hauptfläche liegt, so daß das eine Ende entlang einer kreisförmigen Bahn über die Hauptfläche gleitet, und die auch ein Verschiebungsmeßmittel umfaßt, das für eine Messung der Längsverschiebung des Prüfstücks (4) angeordnet ist,
**dadurch gekennzeichnet**, daß das Verschiebungsmeßmittel einen berührungslosen Verschiebungssensor (5) umfaßt, der fest bezogen auf das Prüfstück (4) so gehaltert ist, daß er jeder Bewegung desselben in Richtung auf die Hauptfläche ausgesetzt wird, wenn sich das Gerät in Gebrauch befindet, um für eine Messung einer Änderung in der Entfernung des Sensors (5) von der Hauptfläche zu sorgen.

2. Gerät nach Anspruch 1, wobei der berührungslose Verschiebungssensor (5) so montiert ist, daß er einer Position auf der Kreisbahn (3) angrenzend an die Bahn gegenüberliegt, auf welcher das Prüfstück (4) in gleitendem Kontakt mit dem Prüfelement (3) ist.

3. Gerät nach Anspruch 1 oder 2, wobei das Prüfelement (3) eine Scheibe ist, welche zwecks Drehung auf einem Drehtisch (2) montiert ist, der drehbar durch eine Grundplatte (1) getragen wird.

## Revendications

1. Dispositif d'essais d'usure comprenant un moyen de support d'une éprouvette (4), de section transversale uniforme le long de son axe principal, d'une manière telle qu'une extrémité de l'éprouvette est maintenue appuyée par une force constante contre la face principale d'un élément d'essais sensiblement plat (3), ledit axe principal de l'éprouvette (4) étant sensiblement perpendiculaire à cette face principale, et un moyen pour provoquer un mouvement rotatif dudit élément d'essais (3) par rapport à ladite éprouvette (4) autour d'un axe déplacé par rapport à l'éprouvette et sensiblement perpendiculaire à ladite face principale, d'une manière telle que ladite extrémité glisse le long d'une piste circulaire sur la face principale, et comprenant aussi un moyen de mesure de déplacement agencé pour mesurer le déplacement longitudinal de ladite éprouvette (4);
caractérisé en ce que le moyen de mesure de déplacement comprend un capteur de déplacement (5) du type sans contact, supporté de façon fixe par rapport à l'éprouvette (4) de façon à être soumis à un mouvement quelconque de celle-ci vers ladite face principale, lorsque le dispositif est en utilisation, afin de fournir une mesure de la variation de la distance du capteur (5) à ladite face principale.

2. Dispositif selon la revendication 1, dans lequel ledit capteur de déplacement (5) du type sans contact est monté de manière à être tourné vers une position de ladite piste circulaire (3) adjacente à la position, sur cette piste, à laquelle l'éprouvette (4) est en contact glissant avec ledit élément (3) d'essais.

3. Dispositif selon la revendication 1 ou 2, dans lequel ledit élément d'essais (3) est un disque qui est monté à rotation sur une table tournante (2) qui est supportée à rotation par une base (1).
